(19) Europäisches Patentamt
European Patent Office
Office européen des brevets

(11) EP 0 626 415 B1

(12) EUROPÄISCHE PATENTSCHRIFT

(45) Veröffentlichungstag und Bekanntmachung des Hinweises auf die Patenterteilung:
**05.02.1997 Patentblatt 1997/06**

(51) Int Cl.[6]: **C08G 77/08**, C08G 79/02

(21) Anmeldenummer: **94108132.5**

(22) Anmeldetag: **26.05.1994**

# (54) Verfahren zum Kondensieren und/oder Äquilibrieren von Organosiliciumverbindungen

Process for condensing and/or equilibrating organosilicon compounds

Procédé de condensation et/ou d'équilibrage des composés organosiliciques

(84) Benannte Vertragsstaaten:
**BE DE ES FR GB IT NL**

(30) Priorität: **28.05.1993 DE 4317909**

(43) Veröffentlichungstag der Anmeldung:
**30.11.1994 Patentblatt 1994/48**

(73) Patentinhaber: **Wacker-Chemie GmbH
81737 München (DE)**

(72) Erfinder:
- **Hager, Rudolf, Dr.
D-84503 Altötting (DE)**
- **Schneider, Otto, Dr.
D-84489 Burghausen (DE)**
- **Schuster, Johann, Dr.
D-84547 Emmerting (DE)**

(56) Entgegenhaltungen:
**EP-A- 0 026 685**
**EP-A- 0 305 737**
**EP-A- 0 532 396**
**GB-A- 2 252 969**
**GB-A- 2 252 975**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein verfahren zur Herstellung von Organopolysiloxanen durch Kondensations- und/oder Äquilibrierungsreaktionen in Anwesenheit von sauerstoffhaltigen Phosphazenen.

Unter dem Begriff Organopolysiloxane sollen im Rahmen dieser Erfindung auch oligomere Siloxane verstanden werden.

Die Herstellung von Organopolysiloxanen durch Kondensations- und/oder Äquilibrierungsreaktionen in Gegenwart von Phosphor-Stickstoff-Verbindungen als Katalysatoren ist bereits bekannt. Als Phosphor-Stickstoff-Verbindungen werden dabei insbesondere wegen deren verhältnismäßig leichter Zugänglichkeit Chlorphosphazene, häufig auch als Phosphornitrilchloride oder Phosphornitridchloride bezeichnet, verwendet. Hierzu sei beispielsweise auf DE 22 29 514 B (Wacker-Chemie GmbH, bekannt gemacht am 20. April 1978) bzw. die entsprechende US 3,839,388 verwiesen, in der Chlorphosphazene mit einem Verhältnis von Phosphor zu Stickstoff größer als eins beschrieben werden, die in Halogenkohlenwasserstoffen gelöst sind. Des weiteren werden in DE 3903137 A (Wacker-Chemie GmbH, veröffentlicht am 16. August 1990) bzw. der entsprechenden US 5,008,229 Chlorphosphazene beschrieben, die in halogenfreien organischen Lösungsmitteln aber nur unter Zusatz von Lösungsvermittlern gelöst sind.

Gegenstand der Erfindung ist ein Verfahren zum Kondensieren und/oder Äquilibrieren von Organosiliciumverbindungen in Gegenwart von sauerstoffhaltigen Phosphazenen der allgemeinen Formel.

$$Y\text{-}PCl_2\text{=}N(\text{-}PCl_2\text{=}N)_n\text{-}PCl_2O \qquad (I),$$

wobei

Y Chloratom oder Hydroxylgruppe bedeutet und
n 0 oder eine ganze Zahl von 1 bis 8, bevorzugt 0 oder eine ganze Zahl von 1 bis 4, besonders bevorzugt 1 bis 3, bedeutet,

und/oder deren Kondensationsprodukten.

Im Fall von Y gleich Hydroxylgruppe, besteht folgende Tautomerie

$$\underset{(I)}{HO\text{-}PCl_2\text{=}N(\text{-}PCl_2\text{=}N)_n\text{-}PCl_2O} \quad <\!\!==\!\!> \quad \underset{(I')}{O\text{=}PCl_2\text{-}NH(\text{-}PCl_2\text{=}N)_n\text{-}PCl_2O}$$

mit n gleich der obengenannten Bedeutung, wobei im allgemeinen das Gleichgewicht bei pH < 7 mehr auf der linken Seite, d.h. bei Verbindung (I), und bei pH > 7 mehr auf der rechten Seite, d.h. bei Verbindung (I'), liegt.

Des weiteren gibt es im Fall von Y gleich Hydroxylgruppe und Phosphazenen mit mehr als drei Phosphoratomen weitere, die mittleren Kettenglieder betreffende Grenzstrukturen, wie z.B.

$$\underset{(I)}{HO\text{-}PCl_2\text{=}N(\text{-}PCl_2\text{=}N)_2\text{-}PCl_2O} \quad <\!\!==\!\!> \quad \underset{(I')}{O\text{=}PCl_2\text{-}NH(\text{-}PCl_2\text{=}N)_2\text{-}PCl_2O}$$

$$\underset{(I'')}{O\text{=}PCl_2\text{-}N\text{=}PCl_2\text{-}NH\text{-}PCl_2\text{=}N\text{-}PCl_2\text{=}O}$$

Alle Ausführungen zu Verbindungen der Formel (I) mit Y gleich OH sollen daher uneingeschränkt auch für tautomere Verbindungen, wie etwa die der Formeln (I') und (I"), gelten.

Obwohl durch Formel (I) nicht ausgedrückt, können die Chloratome ganz oder teilweise durch Reste Q ersetzt sein, wobei Q Hydroxylgruppe, einwertige organische Reste, wie Alkoxyreste, Aryloxyreste, andere Halogenatome als Chlor, Organosiliciumreste und phosphorhaltige Reste bedeutet.

Bevorzugt handelt es sich bei den sauerstoffhaltigen Phosphazenen aer Formel (I) um solche, in denen kein Chloratom durch einen Rest Q substituiert ist.

Bei den erfindungsgemäßen Kondensationsprodukten der sauerstoffhaltigen Phosphazene der Formel (I) kann es sich um beliebige Kondensationsprodukte handeln. Läuft beispielsweise der Kondensationsprozess an den terminalen Phosphoratomen zweier sauerstoffhaltiger Chlorphosphazene durch HCl- oder Wasserabspaltung ab, so werden sauerstoffhaltige Phosphazene der Formel (I) erhalten, in denen Y die Bedeutung von $-O-PCl_2=N(-PCl_2=N)_n-PCl_2O$ hat mit n gleich der obengenannten Bedeutung. Bei Kondensationsreaktionen an nicht-terminalen Phosphoratomen, insbesondere wenn mindestens ein Chloratom in Formel (I) die Bedeutung von Rest Q gleich Hydroxylrest hat, entstehen sauerstaffhaltige Phosphazene der Formel (I), in denen Q die Bedeutung von phosphorhaltigen Resten, wie $-N=P\equiv$ und

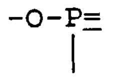 ,

hat.

Beispiele für die erfindungsgemäß eingesetzten sauerstoffhaltigen Chlorphosphazene sind $PCl_3=N-PCl_2O$, $PCl_3=N-PMeClO$, $PCl_3=N-P(OPh)_2O$, $PCl_3=N-PMe(OPh)O$, $PCl_3=N-PEt_2O$, $PCl_3=N-PCl_2=N-PCl_2O$, $PCl_3=N(-PCl_2=N)_2-PCl_2O$, $PCl_3=N(-PCl_2=N)_3-PCl_2O$, $PCl_3=N(-PCl_2=N)_4-PCl_2O$, $PCl_3=N(-PCl_2=N)_5-PCl_2O$, $PCl_3=N(-PCl_2=N)_6-PCl_2O$, $PCl_3=N-PCl(N=PCl_3)-PCl_2O$, $PCl_3=N-P(N=PCl_3)_2-PCl_2O$, $HO-PCl_2=N-PCl_2O$, $HO-PCl_2=N-P(OPh)_2O$, $HO-PPh_2=N-PCl_2O$, $HO-PCl_2=N-PEt_2O$, $HO-PCl_2=N-PCl_2=N-PCl_2O$, $HO-PCl_2=N(-PCl_2=N)_2-PCl_2O$, $HO-PCl_2=N(-PCl_2=N)_3-PCl_2O$, $HO-PCl_2=N(-PCl_2=N)_4-PCl_2O$, $HO-PCl_2=N(-PCl_2=N)_5-PCl_2O$, $HO-PCl_2=N(-PCl_2=N)_6-PCl_2O$, $HO-PCl_2=N-PCl(N=PCl_3)-PCl_2O$, $HO-PCl_2=N-P(N=PCl_3)_2-PCl_2O$, $HO-PCl_2=N-PCl(OH)=N-PCl_2O$, $HO-PCl_2=N-PCl_2=N-PCl(OH)=N-PCl_2O$, $HO-PCl_2=N-P(N=PCl_2OH)\ (N=PCl_3)-PCl_2O$, $OPCl_2=N-PCl_2-O-PCl_2=N-PCl_2O$, $OPCl_2(-N=PCl_2)_2-O-(PCl_2=N-)_2PCl_2O$, $OPCl_2(-N=PCl_2)_3-O-(PCl_2=N-)_3PCl_2O$, $HO-PCl(OBu)=N-PCl(OBu)=N-PCl(OBu)O$, $HO-PCl\ (OPh)=N-PCl(OPh)=N-PCl(OPh)O$, $HO-PCl_2=N-PCl(OPCl_2=N-PCl_2=N-PCl_2O)=N-PCl_2O$ und $HO-PCl_2=N-PCl_2=N-PCl(OSiMe_2[OSiMe_2]_{10}OH)=N-PCl_2O$, wobei $PCl_3=N-PCl_2O$, $PCl_3=N-PCl_2=N-PCl_2O$, $PCl_3=N(-PCl_2=N)_2-PCl_2O$, $PCl_3=N(-PCl_2=N)_3-PCl_2O$, $PCl_3=N(-PCl_2=N)_4-PCl_2O$, $HO-PCl_2=N-PCl_2O$, $HO-PCl_2=N-PCl_2=N-PCl_2O$, $HO-PCl_2=N(-PCl_2=N)_2-PCl_2O$, $HO-PCl_2=N(-PCl_2=N)_3-PCl_2O$, $HO-PCl_2=N(-PCl_2=N)_4-PCl_2O$, $OPCl_2=N-PCl_2-O-PCl_2=N-PCl_2O$, $OPCl_2(-N=PCl_2)_2-O-(PCl_2=N-)_2PCl_2O$ und $OPCl_2(-N=PCl_2)_3-O-(PCl_2=N-)_3PCl_2O$ bevorzugt und $PCl_3=N-PCl_2=N-PCl_2O$, $PCl_3=N(-PCl_2=N)_2-PCl_2O$, $PCl_3=N(-PCl_2=N)_3-PCl_2O$, $HO-PCl_2=N-PCl_2=N-PCl_2O$, $HO-PCl_2=N(-PCl_2=N)_2-PCl_2O$ und $HO-PCl_2=N(-PCl_2=N)_3-PCl_2O$ besonders bevorzugt eingesetzt werden mit Me gleich Methylrest, Et gleich Ethylrest, Bu gleich n-Butylrest und Ph gleich Phenylrest.

Sauerstoffhaltige Phosphazene sowie Verfahren zu deren Herstellung sind bereits bekannt. Hierzu sei bespielsweise auf J. Emsley et al., J. Chem. Soc. A (1971) S. 2863 ff verwiesen, wo die Umsetzungen von Phosphorpentachlorid mit sauerstoffhaltigen Verbindungen, wie Hydroxylamin, Phosphorylchlorid, Amidophosphorsäuren, Stickoxiden und Sulfaten, die in erster Linie zur Darstellung kurzkettiger Phosphorylchlorphosphazene, insbesondere Dichlorphosphinylphosphorimidtrichlorid, geeignet sind, beschrieben werden. Dabei wird die Gruppe $-PCl_2O$ als Phosphorylgruppe bezeichnet. Entsprechend den Ausführungen von H. R. Allcock et al. in J. Am. Chem. Soc. 107 (1985) S. 5167 ff können längere sauerstoffhaltige Chlorphosphazene dargestellt werden, wenn anstelle von Phosphorpentachlorid ionische Chlorphosphazene eingesetzt werden. In R. De Jaeger et al., Macromolecules 25 (1992) 1254 ff wird die Herstellung längerkettiger Phosphorylchlorphosphazene durch thermische Behandlung kurzkettiger Phosphorylchlorphosphazene offenbart. Darüber hinaus können sauerstoffhaltige Phosphazene durch Umsetzung von ionischen Phosphazenen mit Hydroxylgruppen aufweisenden Verbindungen hergestellt werden.

Die angewendeten Mengen an erfindungsgemäß eingesetzten sauerstoffhaltigen Phosphazenen können im Rahmen des erfindungsgemäßen Verfahrens die gleichen sein, wie bei den bisher bekannten Verfahren zur Herstellung von Organosiliciumverbindungen durch Kondensation und/oder Äquilibrierung. Aufgrund der hohen Wirksamkeit der erfindungsgemäß eingesetzten sauerstoffhaltigen Phosphazene sind im allgemeinen jedoch niedrigere Mengen als bei den bisher bekannten Verfahren völlig ausreichend.

Vorzugsweise werden die als Katalysator zur Förderung von Kondensations- und/oder Äquilibrierungsreaktionen von Organosiliciumverbindungen wirksamen sauerstoffhaltigen Phosphazene in Mengen von 0,1 bis 1000 Gew.-ppm (Gewichtsteilen je Million Gewichtsteilen), besonders bevorzugt 1 bis 300 Gew.-ppm, bezogen auf das Gesamtgewicht der zu kondensierenden und/oder zu äquilibrierenden Organosiliciumverbindungen, eingesetzt.

Bei dem erfindungsgemäßen Verfahren können die sauerstoffhaltigen Phosphazene als Reinsubstanzen eingesetzt werden, insbesondere dann, wenn sie flüssig sind. Sie können aber auch im Gemisch mit Stoffen, die mit den sauerstoffhaltigen Phosphazenen nicht oder zumindest nicht innerhalb kurzer Zeit, d.h. einigen Stunden, in einer Weise reagieren, daß deren die Kondensation und/oder Äquilibrierung von Organosiliciumverbindungen beschleunigende Wirkung nennenswert herabgesetzt wird, eingesetzt werden.

Vorzugsweise werden bei dem erfindungsgemäßen Verfahren die sauerstoffhaltigen Phosphazene im Gemisch mit halogenfreiem organischen Lösungsmittel eingesetzt, wobei Lösungsmittel oder Lösungsmittelgemische mit einem

Siedepunkt bzw. Siedebereich bei Normaldruck von bis zu 160°C, insbesondere von bis zu 120 °C, bevorzugt sind.

Beispiele für solche Lösungsmittel sind Alkohole, wie Methanol, Ethanol, n-Propanol, iso-Propanol und n-Butanol, Carbonsäuren, wie Ameisensäure und Essigsäure, Ether, wie Dioxan, Tetrahydrofuran, Diethylether und Diethylenglykoldimethylether, Ester, wie Methylacetat, Ethylacetat, n- und isopropylacetat, Diethylcarbonat und Ethylformiat, Kohlenwasserstoffe, wie Pentan, n-Hexan, Hexan-Isomerengemisch, Cyclohexan, Heptan, Octan, Waschbenzin, Petrolether, Benzol, Toluol und Xylole, Ketone, wie Aceton, Methylethylketon, Diethylketon und Methylisobutylketon, Amide, wie Dimethylformamid und N-Methylpyrrolidon, sowie Gemische dieser Lösungsmittel, wobei Kohlenwasserstoffe, insbesondere Toluol und Xylole, und Ester, insbesondere Ethylacetat, besonders bevorzugt sind.

Falls bei dem erfindungsgemäßen Verfahren die sauerstoffhaltigen Phosphazene im Gemisch mit halogenfreien organischen Lösungsmitteln eingesetzt werden, beträgt die Konzentration an sauerstoffhaltigem Phosphazen vorzugsweise 0,01 bis 50 Gewichtsprozent, besonders bevorzugt 0,1 bis 20 Gewichtsprozent, bezogen auf das Gewicht des Gemischs.

Falls erwünscht, können die sauerstoffhaltigen Phosphazene selbstverständlich auch im Gemisch mit halogenhaltigen Lösungsmitteln eingesetzt werden, was jedoch insbesondere in toxikologischer Hinsicht meist nicht erwünscht ist.

Bei dem erfindungsgemäßen Verfahren können als Organosiliciumverbindung beliebige Organosiliciumverbindungen eingesetzt werden, die auch bisher in Gegenwart von Katalysatoren auf Phosphazenbasis kondensiert und/oder äquilibriert werden konnten.

Kondensationsreaktionen von Organosiliciumverbindungen sind insbesondere die Reaktionen von zwei Si-gebundenen Hydroxylgruppen unter Austritt von Wasser, ferner beispielsweise die Reaktion einer Si-gebundenen Hydroxylgruppe mit einer Si-gebundenen Alkoxygruppe unter Austritt von Alkohol oder mit Si-gebundenem Halogen unter Austritt von Halogenwasserstoff.

Unter Äquilibrierungsreaktionen werden die Umlagerungen von Siloxanbindungen von Siloxaneinheiten verstanden.

Kondensations- und Äquilibrierungsreaktionen verlaufen häufig gleichzeitig.

Organosiliciumverbindungen, die in dem erfindungsgemäßen Verfahren eingesetzt werden können, sind allgemein bekannt und werden häufig durch die allgemeinen Formeln

$$X(SiR_2O)_aSiR_2X \qquad (II)$$

und

$$(SiR_2O)_b \qquad (III)$$

wiedergegeben, wobei

- R gleich oder verschieden sein kann und Wasserstoffatom oder einwertige, gegebenenfalls substituierte Kohlenwasserstoffreste bedeutet,
- X gleich oder verschieden sein kann und Hydroxylgruppe, Rest $-OR^1$ mit $R^1$ gleich einwertigem organischen Rest, $-OSiR_3$ mit R gleich der vorstehenden Bedeutung oder Halogenatom bedeutet,
- a 0 oder eine ganze Zahl von mindestens 1, bevorzugt 2 bis 1000, besonders bevorzugt 2 bis 500, und
- b eine ganze Zahl im Wert von 3 bis 12, bevorzugt 4 bis 8, besonders bevorzugt 4, ist.

Obwohl durch die häufig verwendeten Formeln nicht dargestellt, können bis zu 5 Molprozent der Diorganosiloxaneinheiten durch andere Siloxaneinheiten, wie $RSiO_{3/2}$- und/oder $SiO_{4/2}$-Einheiten, ersetzt sein, wobei R die vorstehend dafür angegebene Bedeutung hat.

Bevorzugt handelt es sich bei Rest R um Wasserstoffatom und Kohlenwasserstoffreste mit 1 bis 18 Kohlenstoffatomen, wobei Kohlenwasserstoffreste mit 1 bis 4 Kohlenstoffatomen, insbesondere der Methylrest, besonders bevorzugt sind.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Alkenylreste, wie der Vinyl-, Allyl-, n-5-Hexenyl-, 4-Vinylcyclohexyl- und der 3-Norbornenylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie

der Phenyl-, Biphenylyl-, Naphthyl- und Anthryl- und Phenanthrylrest; Alkarylreste, wie o-, m-, p-Tolylreste, Xylylreste und Ethylphenylreste; Aralkylreste, wie der Benzylrest, der α- und der β-Phenylethylrest.

Beispiele für einwertige, substituierte Kohlenwasserstoffreste R sind Cyanalkylreste, wie der β-Cyanethylrest, Halogenalkylreste, wie der 3,3,3-Trifluorpropylrest und der γ-Chlorpropylrest, Halogenarylreste, wie o-, m- und p-Chlorphenylreste, 3-Hydroxypropylrest, Acyloxyalkylreste, wie der γ-Acryloxypropylrest und der γ-Methacryloxypropylrest.

Bei Rest $R^1$ handelt es sich bevorzugt um Alkylreste mit 1 bis 4 Kohlenstoffatomen, besonders bevorzugt um den Methylund den Ethylrest.

Die Viskosität der bei dem erfindungsgemäßen Verfahren eingesetzten Organosiliciumverbindungen der Formel (II) liegt vorzugsweise zwischen 0,6 und $10^6$ $mm^2/s$ bei einer Temperatur von 25°C, besonders bevorzugt zwischen 10 und $10^4$ $mm^2/s$.

Beispiele für Verbindungen der Formel (II) sind α,ω-Dihydroxydimethylpolysiloxan mit einer Viskosität von 80 $mm^2/s$ bei 25 °C, α,ω-Dihydroxydimethylpolysiloxan mit einer Viskosität von 20 000 $mm^2/s$ bei 25 °C, α,ω-Dichlorodimethylpolysiloxan mit einer Viskosität von 40 $mm^2/s$ bei 25 °C, α,ω-Bis(trimethylsiloxy)polymethylhydrogensiloxan mit einer Viskosität von 25 $mm^2/s$ bei 25 °C, α,ω-Bis(trimethylsiloxy)polydimethylsiloxan mit einer Viskosität von 20 $mm^2/s$ bei 25 °C, Hexamethyldisiloxan und 1,3-Divinyl-1,1,3,3-tetramethyldisiloxan.

Beispiele für Verbindungen der Formel (III) sind Hexamethylcyclotrisiloxan, Octamethylcyclotetrasiloxan und Decamethylcyclopentasiloxan.

Hat in Formel (II) X die Bedeutung von $-OSiR_3$ mit R gleich der obengenannten Bedeutung, so handelt es sich um Organosiliciumverbindungen, welche die Kettenlänge regeln.

Des weiteren können bei dem erfindungsgemäßen Verfahren beliebige, die Kettenlänge regelnde Organosiliciumverbindungen eingesetzt werden, die auch bei den bisher bekannten Verfahren zum Kondensieren und/oder Äquilibrieren in Gegenwart eines Katalysators auf Phosphazenbasis mitverwendet werden konnten.

Vorzugsweise handelt es sich bei derartigen, die Kettenlänge regelnden Organosiliciumverbindungen neben den Verbindungen der Formel (II) mit X gleich $-OSiR_3$ um solche der Formel

$$R^2{}_3SiZ \qquad (IV),$$

worin

$R^2$ gleich oder verschieden sein kann und eine für R angegebene Bedeutung hat und
Z Hydroxylgruppe, Rest $-OR^1$ mit $R^1$ gleich einwertigem organischen Rest oder Halogenatom bedeutet.

Beispiele für Rest $R^2$ sind die für R gleich organischem Rest angegebenen Beispiele.

Bei Z handelt es sich vorzugsweise um Hydroxylgruppe, Chloratom, Methoxyrest und Ethoxyrest.

Beispiele für Verbindungen der Formel (IV) sind Trimethylchlorsilan und Trimethylmethoxysilan.

Die Menge an eingesetzter, die Kettenlänge regelnder Organosiliciumverbindung richtet sich nach der gewünschten Höhe des Molekulargewichts der durch Kondensation und/oder Äquilibrierung hergestellten Organopolysiloxane und ist bereits bekannt.

Die erfindungsgemäß eingesetzten Organosiliciumverbindungen sind handelsübliche Produkte bzw. nach in der Silicon-Chemie üblichen Verfahren herstellbar.

Bei den einzelnen im erfindungsgemäßen Verfahren eingesetzten Bestandteilen kann es sich jeweils um eine Art derartiger Bestandteile wie auch um ein Gemisch aus mindestens zwei Arten derartiger Bestandteile handeln.

Die angewendeten Temperaturen und Drücke können im erfindungsgemäßen Verfahren ebenfalls die gleichen sein wie bei den bisher bekannten Verfahren zum Kondensieren und/oder Äquilibrieren von Organosiliciumverbindungen.

Die Kondensations- und/oder Äquilibrierungsreaktionen werden vorzugsweise bei 50 bis 200°C, besonders bevorzugt 80 bis 160°C, durchgeführt.

Die Kondensations- und/oder Äquilibrierungsreaktionen können bei einem Druck der umgebenden Atmosphäre, also 900 bis 1100 hPa, durchgeführt werden. Um die Abführung der bei der Kondensation gebildeten Spaltprodukte, wie beispielsweise Wasser, HCl oder Alkohol, zu erleichtern, wird das Kondensieren und/oder Äquilibrieren der Organosiliciumverbindungen vorzugsweise bei einem Druck unterhalb 80 kPa durchgeführt. Das Kondensieren, insbesondere aber das Äquilibrieren, ist aber auch bei höheren Drücken durchführbar.

Das erfindungsgemäße Verfahren kann sowohl absatzweise als auch kontinuierlich durchgeführt werden.

Nach Erreichen der gewünschten Viskosität kann die Viskosität der im Rahmen des erfindungsgemäßen Verfahrens erhaltenen Organosiliciumverbindung konstant gehalten werden, indem der erfindungsgemäß verwendete Katalysator bzw. ein Umsetzungsprodukt, welches aus diesem Katalysator durch Umsetzung mit zu kondensierender und/oder zu äquilibrierender Organosiliciumverbindung gebildet wurde und ebenfalls das Kondensieren und/oder Äquilibrieren von Organosiliciumverbindungen fördert, durch Zugabe von Inhibitoren bzw. Desaktivatoren, die auch bisher im Zusammenhang mit Phosphazenen eingesetzt wurden, wie z.B. Triisononylamin, n-Butyllithium, Lithiumsiloxanolat, Hexamethyldisilazan und Magnesiumoxid, inhibiert bzw. desaktiviert wird.

Um eine gute Verteilung der bei dem erfindungsgemäßen Verfahren eingesetzten Komponenten ineinander zu gewährleisten, wird vorzugsweise das Gemisch dieser Stoffe während der Durchführung des erfindungsgemäßen Verfahrens bewegt.

Die erfindungsgemäß hergestellten Organopolysiloxane, insbesondere lineare Organopolysiloxane, können für alle Zwecke verwendet werden, bei denen auch die nach bisher bekannten Verfahren durch Kondensieren und/oder Äquilibrieren von Organosiliciumverbindungen erzeugten linearen Organopolysiloxane eingesetzt werden konnten, wie z.B. für Pflegemittel und kosmetische Rezepturen, als Fadengleitmittel, zur Herstellung von Organopolysiloxanelastomeren, wobei die Vernetzung je nach Art der endständigen Einheiten der linearen Organopolysiloxane durch Kondensation, Anlagerung von Si-gebundenem Wasserstoff an z.B. SiC-gebundene Vinylgruppen oder durch Radikalbildung erfolgen kann, und zur Herstellung von klebrige Stoffe abweisenden Überzügen.

Das erfindungsgemäße Verfahren hat den Vorteil, daß es einfach in der Durchführung ist und hohe Ausbeuten erzielt werden.

Die erfindungsgemäß eingesetzten, die Kondensations- und Äquilibrierungsprozesse fördernden sauerstoffhaltigen Chlorphosphazene zeigen eine hohe Aktivität und sind zudem außerordentlich stabil. So sind die erfindungsgemäß eingesetzten sauerstoffhaltigen Chlorphosphazene bei vollständigem Ausschluß von Feuchtigkeit mehr oder weniger unbegrenzt lagerfähig. Bei nicht vollständigem Ausschluß von Feuchtigkeit haben die erfindungsgemäß eingesetzten sauerstoffhaltigen Chlorphosphazene den Vorteil, daß sie nichts oder nur sehr wenig ihrer Aktivität verlieren. Des weiteren haben die erfindungsgemäß eingesetzten sauerstoffhaltigen Chlorphosphazene den Vorteil, daß sie in vielen halogenfreien organischen Lösungsmitteln ohne Zusatz von Lösungsvermittlern löslich sind. Ein weiterer Vorteil der erfindungsgemäß eingesetzten sauerstoffhaltigen Phophazene besteht darin, daß flüssige Spezies zugänglich sind, die auch ohne Lösungsmittel problemlos eingesetzt werden können, da sie im Gegensatz zu Feststoffen einfach und exakt dosierbar sind.

In den nachstehend beschriebenen Beispielen beziehen sich alle Angaben von Teilen und Prozentsätzen, falls nicht anders angegeben, auf das Gewicht. Des weiteren beziehen sich alle Viskositätsangaben auf eine Temperatur von 25°C. Sofern nicht anders angegeben, wurden die nachstehenden Beispiele bei einem Druck der umgebenden Atmosphäre, also etwa 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

In Anlehnung an die oben bereits zitierte DE 22 29 514 B werden durch Umsetzung von Phosphorpentachlorid mit Ammoniumchlorid im Verhältnis $PCl_5 : NH_4Cl$ im Bereich von 2:1 bis 1,5:1 folgende Produkte bzw. Produktgemische erhalten:

Phosphazen A: $[PCl_3{=}N{-}PCl_2{=}N{-}PCl_3]^+[PCl_6]^-$
Phosphazen B: Gemisch aus 5 % $[PCl_3{=}N{-}PCl_2{=}N{-}PCl_3]^+[PCl_6]^-$ und 95 % $[PCl_3{=}N({-}PCl_2{=}N)_2{-}PCl_3]^+[PCl_6]^-$
Phosphazen C: Gemisch aus 15 % $[PCl_3{=}N({-}PCl_2{=}N)_2{-}PCl_3]^+[PCl_6]^-$ und 85 % $[PCl_3{=}N({-}PCl_2{=}N)_3{-}PCl_3]^+[PCl_6]^-$.

**Beispiel 1**

In einem Kolben mit Rührer und Gasauslaß werden unter Ausschluß von Feuchtigkeit 64,82 g (0,1 mol) Phosphazen A in 100 ml Toluol dispergiert. Unter Rühren werden zu dieser Mischung bei Raumtemperatur 3,6 g (0,2 mol) entionisiertes Wasser so langsam zudosiert, daß die Temperatur der Mischung infolge der exothermen Reaktion nicht über 40 °C steigt. Die Reaktion ist beendet, wenn die Reaktionsmischung homogen ist und kein HCl-Gas mehr entweicht. Bei 30 °C und 100 Pa werden die flüchtigen Bestandteile entfernt. Zurück bleiben 38,2 g eines ockerfarbenen Öls, aus dem sich bei 0 °C nach kurzer Zeit farblose Kristalle ausscheiden. Nach 2 Stunden ist die gesamte Substanz zu einem leicht gelblichen, wachsartigen Feststoff erstarrt. Ausbeute: 32,7 g $PCl_3{=}N{-}PCl_2{=}N{-}PCl_2O$ Schmelzpunkt: 34 °C

In einem Kolben mit Rührer werden 475 g $\alpha,\omega$-Dihydroxypolydimethylsiloxan einer Viskosität von ca. 80 $mm^2s^{-1}$ und 25 g $\alpha,\omega$-Bis(trimethylsiloxy)polydimethylsiloxan einer Viskosität von ca. 20 $mm^2s^{-1}$ auf 150 °C erhitzt und unter Rühren mit 0,30 ml einer Lösung von 1 g $PCl_3{=}N{-}PCl_2{=}N{-}PCl_2O$ in 113,5 ml Toluol versetzt. Nach Zugabe des Katalysators wird der Druck im Reaktionsgefäß auf ca. 100 Pa erniedrigt und die Reaktionsmischung noch 10 Minuten bei 150 °C gerührt. Anschließend wird der Druck wieder auf den Wert der Umgebungsluft erhöht und zur Desaktivierung des Katalysators 0,15 g einer basischen Siloxanmischung zugesetzt, die durch Umsetzung von 5 g n-Butyllithium mit 250 g $\alpha,\omega$-Bis(trimethylsiloxy)polydimethylsiloxan einer Viskosität von 350 $mm^2s^{-1}$ hergestellt worden ist. Als Produkt wird ein a,$\omega$- Bis (trimethylsiloxy)polydimethylsiloxan einer Viskosität von 4000 $mm^2s^{-1}$ erhalten, welches glasklar, farb-

und geruchlos ist und auch bei mehrtägiger Lagerung bei Temperaturen um 200°C keine Änderung der Eigenschaften zeigt.

**Beispiel 2**

In einem Kolben mit Gasauslaß wird eine Lösung von 126,4 g Phosphazen B in 250 ml 1,2,3-Trichlorpropan bei 50 °C mit 9,0 g (0,5 mol) entionisiertem Wasser versetzt und bei dieser Temperatur so lange gerührt, bis kein HCl-Gas mehr entweicht. Anschließend wird das Lösungsmittel zusammen mit anderen flüchtigen Bestandteilen bei 80 °C und 50 Pa entfernt. Als Rückstand verbleibt eine braune, ölige Flüssigkeit. Ausbeute: 69,4 g eines Gemisches aus HO-$PCl_2$=N-$PCl_2$=N-$PCl_2O$ (5 %) und HO-$PCl_2$=N(-$PCl_2$=N)2-$PCl_2O$ (95 %).

In einem Kolben mit Rührer werden 240 g α,ω-Bis(trimethylsiloxy)polymethylhydrogensiloxan einer Viskosität von 25 $mm^2s^{-1}$ und 100 g α,ω-Bis(trimethylsiloxy)polydimethylsiloxan einer Viskosität von 350 $mm^2s^{-1}$ bei 120 °C mit 0,15 ml einer Lösung von 2 g des oben hergestellten Gemisches aus HO-$PCl_2$=N-$PCl_2$=N-$PCl_2O$ und HO-$PCl_2$=N(-$PCl_2$=N)$_2$-$PCl_2O$ in 40 ml p-Xylol versetzt und bei dieser Temperatur 10 Minuten gerührt. Nach Abkühlung auf Raumtemperatur werden zur Desaktivierung des Katalysators 0,5 g Magnesiumoxid in die Reaktionsmischung eingerührt, anschließend wird filtriert. Als Produkt wird ein Siloxan der durchschnittlichen Formel $Me_3Si[OSiMe_2]_{13,5}[OSiMeH]_{36,5}OSiMe_3$ erhalten, welches glasklar, farb- und geruchlos ist und auch bei mehrtätiger Lagerung bei Temperaturen um 150°C keine Änderung der Eigenschaften zeigt. Das $^{29}$Si-NMR-Spektrum zeigt, daß Dimethylsiloxy- und Methylhydrogensiloxy-Einheiten statistisch verteilt sind. Weniger als 1/10 der Dimethylsiloxy-Einheiten ist noch von zwei Dimethylsiloxy-Einheiten umgeben.

**Vergleichsbeispiel 1**

Die in Beispiel 2 beschriebene Arbeitsweise wird wiederholt mit der Abänderung, daß anstelle von 0,15 ml einer Lösung von 2 g des Gemisches aus HO-$PCl_2$=N-$PCl_2$=N-$PCl_2O$ und HO-$PCl_2$=N(-$PCl_2$=N)$_2$-$PCl_2O$ in 40 ml p-Xylol 0,50 ml einer 1 %igen Lösung eines Phosphornitrilchlorids, das gemäß der oben zitierten DE 22 29 514 B hergestellt wird und Phosphor und Stickstoff im Verhältnis 2 zu 1 enthält, in 1,2,3-Trichlorpropan eingesetzt wird.

Als Produkt wird ein farbloses, klares Öl mit einer Viskosität von 45 $mm^2/s$ der durchschnittlichen Formel $Me_3Si[OSiMe_2]_{13,5}[OSiMeH]_{36,5}OSiMe_3$ erhalten. Das $^{29}$Si-NMR-Spektrum zeigt, daß Dimethylsiloxy- und Methylhydrogensiloxy-Einheiten nicht statistisch verteilt sind. Die Hälfte der Dimethylsiloxy-Einheiten ist noch von zwei Dimethylsiloxy-Einheiten umgeben.

**Beispiel 3**

In einem Schneckenreaktor werden kontinuierlich 1500 kg/h α,ω-Dihydroxypolydimethylsiloxan mit einer Viskosität von ca. 120 $mm^2s^{-1}$ und 500 ml/h einer 0,5 Gew.-%igen Lösung des nach Beispiel 2 hergestellten Gemisches aus HO-$PCl_2$=N-$PCl_2$=N-$PCl_2O$ (5 %) und HO-$PCl_2$=N(-$PCl_2$=N)$_2$-$PCl_2O$ (95 %) in Ethylacetat dosiert. Die Temperatur im Reaktor beträgt 160 °C, der Druck 6 kPa. Nach einer mittleren Verweilzeit von ca. 2 Minuten wird der Katalysator durch kontinuierliche Zugabe von 10 ml/h Triisononylamin desaktiviert. Als Produkt wird ein α,ω-Dihydroxypolydimethylsiloxan mit einer Viskosität von ca. 350000 $mm^2s^{-1}$ erhalten, welches glasklar, farb- und geruchlos ist.

**Vergleichsbeispiel 2**

In einem Schneckenreaktor werden kontinuierlich 1500 kg/h α,ω-Dihydroxypolydimethylsiloxan mit einer Viskosität von ca. 120 $mm^2s^{-1}$ und 450 ml/h einer gemäß der bereits zitierten DE 39 03 137 A hergestellten 1 %igen Lösung eines sauerstofffreien Phosphornitrilchlorids, das gemäß der bereits zitierten DE 22 29 514 B durch Umsetzung von 2 Mol Phosphorpentachlorid mit 1 Mol Ammoniumchlorid hergestellt wird, in 0,04 Gew.-% Ammoniumlaurylsulfat enthaltendem Ethylacetat dosiert. Die Temperatur im Reaktor beträgt 160 °C, der Druck 6 kPa. Nach einer mittleren Verweilzeit von ca. 2 Minuten wird der Katalysator durch kontinuierliche Zugabe von 20 ml/h Triisononylamin desaktiviert. Als Produkt wird ein α,ω-Dihydroxypolydimethylsiloxan mit einer Viskosität von ca. 350000 $mm^2s^{-1}$ erhalten, welches glasklar, farb- und geruchlos ist.

**Beispiel 4**

In einem Kolben mit Gasauslaß werden bei Raumtemperatur 3,6 g (0,2 mol) entionisiertes Wasser unter Rühren zu einer Dispersion von 86,3 g (0,1 mol) Phosphazen C in 100 ml Toluol getropft. Die Geschwindigkeit der Wasserzugabe wird dabei so eingestellt, daß die Temperatur der Mischung infolge der exothermen Reaktion nicht über 40 °C steigt. Die Reaktion ist beendet, wenn kein HCl-Gas mehr entweicht. Bei 40 °C und 200 Pa werden die flüchtigen

Bestandteile entfernt. Zurück bleibt eine gelbbraune Flüssigkeit. Ausbeute: 57,1 g eines Gemisches aus $PCl_3=N(-PCl_2=N)_2-PCl_2O$ (15 %) und $PCl_3=N(-PCl_2=N)_3-PCl_2O$ (85 %).

In einen Schneckenkneter werden kontinuierlich 600 kg/h eines α,ω-Dihydroxypolydimethylsiloxans mit einer Viskosität von ca. 120 $mm^2s^{-1}$, 500 ml/h einer Katalysatorlösung, die 1,5 Gew.-% des oben hergestellten Phophazengemisches aus $PCl_3=N(-PCl_2=N)_2-PCl_2O$ und $PCl_3=N(-PCl_2=N)_3-PCl_2O$) in Toluol enthält, sowie 80 kg/h eines α,ω-Bis (vinyldimethylsiloxy)polydimethylsiloxans mit einer Viskosität von 180 $mm^2/s$ eingespeist. Die Temperatur im Reaktor beträgt 160 °C, der Druck weniger als 500 Pa. Nach einer mittleren Verweilzeit von ca. 3 Minuten wird der Katalysator durch kontinuierliche Zugabe von 300 ml/h 1,2-Divinyl-1,1,2,2-tetramethyldisilazan desaktiviert. Als Produkt wird ein α,ω-Bis(vinyldimethylsiloxy)polydimethyl-siloxan mit einer Viskosität von ca. 20000 $mm^2s^{-1}$ erhalten.

## Patentansprüche

1. Verfahren zum Kondensieren und/oder Äquilibrieren von Organosiliciumverbindungen in Gegenwart von sauerstoffhaltigen Phosphazenen der allgemeinen Formel

$$Y-PCl_2=N(-PCl_2=N)_n-PCl_2O \qquad (I),$$

wobei

Y Chloratom oder Hydroxylgruppe bedeutet und
n 0 oder eine ganze Zahl von 1 bis 8 bedeutet,

und/oder deren Kondensationsprodukten,
mit der Maßgabe, daß die in Formel (I) dargestellten Chloratome ganz oder teilweise durch Reste Q ersetzt sein können, wobei Q Hydroxylgruppe, einwertige organische Reste, wie Alkoxyreste, Aryloxyreste, andere Halogenatome als Chlor, Organosiliciumreste und phosphorhaltige Reste bedeutet.

2. Verfahren nach Anspruch 1, dadurch gekennzeichnet, daß n eine ganze Zahl von 1 bis 3 ist.

3. Verfahren nach einem oder mehreren der Ansprüche 1 bis 2, dadurch gekennzeichnet, daß sauerstoffhaltige Phosphazene in Mengen von 0,1 bis 1000 Gew.-ppm (Gewichtsteilen je Million Gewichtsteilen), bezogen auf das Gesamtgewicht der zu kondensierenden und/oder zu äquilibrierenden Organosiliciumverbindungen, eingesetzt werden.

4. Verfahren nach einem oder mehreren der Ansprüche 1 bis 3, dadurch gekennzeichnet, daß die sauerstoffhaltigen Phosphazene im Gemisch mit halogenfreiem organischen Lösungsmittel eingesetzt werden.

5. Verfahren nach einem oder mehreren der Ansprüche 1 bis 4, dadurch gekennzeichnet, daß es bei 50 bis 200°C durchgeführt wird.

6. Verfahren nach einem oder mehreren der Ansprüche 1 bis 5, dadurch gekennzeichnet, daß es bei einem Druck unterhalb von 80 kPa durchgeführt wird.

## Claims

1. Process for the condensation and/or equilibration of an organosilicon compound in the presence of oxygen-containing phosphazenes of the general formula:

$$Y-PCl_2=N(-PCl_2=N)_n-PCl_2O \qquad (I),$$

in which

Y denotes a chlorine atom or the hydroxyl group and

n denotes 0 or an integer from 1 to 8,

and/or condensation products thereof,
with the proviso that all or some of the chlorine atoms shown in formula (I) can be replaced by radicals Q, in which Q denotes the hydroxyl group, monovalent organic radicals, such as alkoxy radicals or aryloxy radicals, halogen atoms other than chlorine, organosilicon radicals and phosphorus-containing radicals.

**2.** Process according to Claim 1, characterized in that n is an integer from 1 to 3.

**3.** Process according to one or more of Claims 1 to 2, characterized in that the oxygen-containing phosphazenes are employed in an amount of 0.1 to 1,000 ppm by weight (parts by weight per million parts by weight), based on the total weight of the organosilicon compounds to be subjected to condensation and/or to be equilibrated.

**4.** Process according to one or more of Claims 1 to 3, characterized in that the oxygen-containing phosphazenes are employed as a mixture with a halogenfree organic solvent.

**5.** Process according to one or more of Claims 1 to 4, characterized in that it is carried out at 50 to 200°C.

**6.** Process according to one or more of Claims 1 to 5, characterized in that it is carried out under a pressure below 80 kPa.

## Revendications

**1.** Procédé de condensation et/ou d'équilibrage de composés organosiliciques en présence de phosphazènes oxygénés de formule générale

$$Y\text{-}PCl_2\text{=}N(\text{-}PCl_2\text{=}N)_n\text{-}PCl_2O \qquad (I)$$

dans laquelle

Y représente un atome de chlore ou un groupe hydroxyle, et
n représente 0 ou un nombre entier de 1 à 8,

et/ou leurs produits de condensation,
avec la condition que les atomes de chlore représentés dans la formule (I) peuvent être complètement ou partiellement remplacés par des radicaux Q, où Q représente des groupes hydroxyle, des radicaux organiques monovalents tels que des radicaux alcoxy, des radicaux aryloxy, d'autres atomes d'halogène que le chlore, des radicaux organosiliciques et des radicaux phosphorés.

**2.** Procédé suivant la revendication 1, caractérisé en ce que n est un nombre entier de 1 à 3.

**3.** Procédé suivant l'une ou plusieurs des revendications 1 à 2, caractérisé en ce que l'on introduit les phosphazènes oxygénés en des quantités de 0,1 à 1000 ppm en poids (parties en poids par million de parties en poids), sur base du poids total des composés organosiliciques à condenser et/ou à équilibrer.

**4.** Procédé suivant l'une ou plusieurs des revendications 1 à 3, caractérisé en ce que l'on introduit les phosphazènes oxygénés en mélange avec un solvant organique non halogéné.

**5.** Procédé suivant l'une ou plusieurs des revendications 1 à 4, caractérisé en ce qu'il est réalisé entre 50 et 200°C.

**6.** Procédé suivant l'une ou plusieurs des revendications 1 à 5, caractérisé en ce qu'il est réalisé à une pression inférieure à 80 kPa.